# EUROPEAN PATENT APPLICATION

(11) **EP 2 388 982 A2**
(43) Date of publication of application: **23.11.2011**
(21) Application number: 11166159.1
(22) Date of filing: 16.05.2011
(51) Int. Cl.: H04M 1/725, G06F 1/16

(54) **Controlling single-picture element (pixel) displays**

(30) Priority: 17.05.2010 US 345310 P; 08.06.2010 US 796260
(71) Applicant: Sony Ericsson Mobile Communications AB, 221 88 Lund (SE)
(72) Inventor: Ek, Martin, 247 55, Dalby (SE)
(74) Representative: VALEA AB

(57) **Abstract**

A method may include scanning, by a portable device, information from a storage unit of the portable device to change a color gradient on a surface of a single-pixel display attached to a housing of the portable device. In addition, the method may include detecting, by the portable device, a change in state of the portable device and sending a square wave signal or sine wave signal to the single-pixel display when the information provides for sending the slow-changing square wave or sine wave in response to the detected change in state of the portable device. Further, the method may include changing the illumination, color, or color gradient in accordance with the square wave signal or the sine wave signal.

## Description

### BACKGROUND

Typically, the main display of a portable device (e.g., a smart phone) provides for input and/or output functions. Via the main display, the portable device may convey visual information to a user. In addition, the user may provide input to the portable device through a touch screen that overlays the main display.

### SUMMARY

According to one aspect, a device may include a display screen to provide a graphical user interface, a single-pixel display configured to provide color gradient patterns, the single-pixel display including no more than one pixel, and a processor to send a slowly varying signal to the single-pixel display to present the color gradient patterns. Additionally, the single-pixel display may include one of an eletrochromic polymer, an electronic ink, or an electronic paper.

Additionally, the device may include one of a cellular phone, a tablet computer, or a laptop computer.

Additionally, the electrochromic material may include a light-source layer, an active layer formed over the light source layer, and a transparent layer formed over the active layer.

Additionally, the processor may be further configured to detect a change in a state of the device, and send the signal when the processor detects the change in the state.

Additionally, the change in the state may include turning the device on or off, receiving an incoming call or terminating a received call, or receiving an email or text message.

Additionally, the signal may include one of a sine wave or a square wave.

Additionally, the visual pattern may include a color gradient across a surface of the single-pixel display, a color change, or a change in illumination.

Additionally, the color gradient may move from one area of the single-pixel display to another area of the single-pixel display depending on the signal applied to the surface of the single-pixel display.

Additionally, the device may further include a housing having curved surfaces to which the single-pixel display is affixed.

Additionally, the processor may be further configured to read software instructions from a memory device, and change the visual pattern in accordance with the software instructions.

According to another aspect, a method may include scanning, by a portable device, information from a storage unit of the portable device to change a color gradient on a surface of a single-pixel display attached to a housing of the portable device. The method may also include detecting, by the portable device, a change in state of the portable device and sending a slow-changing square wave signal or sine wave signal to the single-pixel display when the information provides for sending the slow-changing square wave or sine wave in response to the detected change in state of the portable device. Further, the method may include changing the illumination, color, or color gradient in accordance with the square wave signal or the sine wave signal.

Additionally, the portable device may include a smart phone or a tablet computer.

Additionally, the detecting the change in state includes detecting an incoming communication or detecting a powered-up state of the device.

Additionally, the changing the color gradient may include moving the color gradient from one area of the single-pixel display to another area of the single-pixel display.

Additionally, the single-pixel display may include electrohromic plastic.

Additionally, the information may include software instructions.

According to yet another aspect, a computer-readable storage device may include computer-readable instructions for causing one or more processors to read data from a storage unit of a portable device to change an illumination or color gradient across a surface of a single-pixel display attached to a housing of the portable device, detect a change in state of the portable device, and cause a component to transmit a slow-changing square wave signal or a sine wave signal to the single-pixel display when the data provides for sending the slow-changing square wave signal or the sine wave signal in response to the detected change in state of the portable device.

Additionally, the single-pixel display may include more than one pixel and no more than ten pixels.

Additionally, the portable device may include a smart phone or a tablet computer.

### BRIEF DESCRIPTION OF THE DRAWINGS

The accompanying drawings, which are incorporated in and constitute a part of this specification, illustrate one or more embodiments described herein and, together with the description, explain the embodiments. In the drawings:

Fig. 1 is a diagram of an exemplary user device in which concepts described herein may be implemented;

Figs. 2A and 2B are front and rear views of the user device of Fig. 1 according to another implementation;

Fig. 3A is a block diagram of exemplary components of the user device of Figs. 2A and 2B;

Fig. 3B is a block diagram of an exemplary functional component of the user device of Figs. 2A and 2B;

Fig. 4A is a diagram of an exemplary single-picture element (pixel) display of Fig. 2A;

Fig. 4B is a block diagram of a cross-sectional view of an exemplary configuration of the single-pixel display of Fig. 4A;

Figs. 5A through 5C illustrate controlling the exemplary single-pixel displays of Fig. 2A;

Figs. 6A through 6D illustrate controlling the exemplary single-pixel displays of Fig. 2B; and

Fig. 7 is a flow diagram of an exemplary process for controlling single-pixel displays.

### DETAILED DESCRIPTION

The following detailed description refers to the accompanying drawings. The same reference numbers in different drawings may identify the same or similar elements. As used herein, the term "single-pixel display" may refer to a display with one or few pixels (e.g., 1, 2, 3, 4, 5, ... 10, etc.). Each pixel on a display may represent the basic unit of area that can be controlled independently from other pixels of the display.

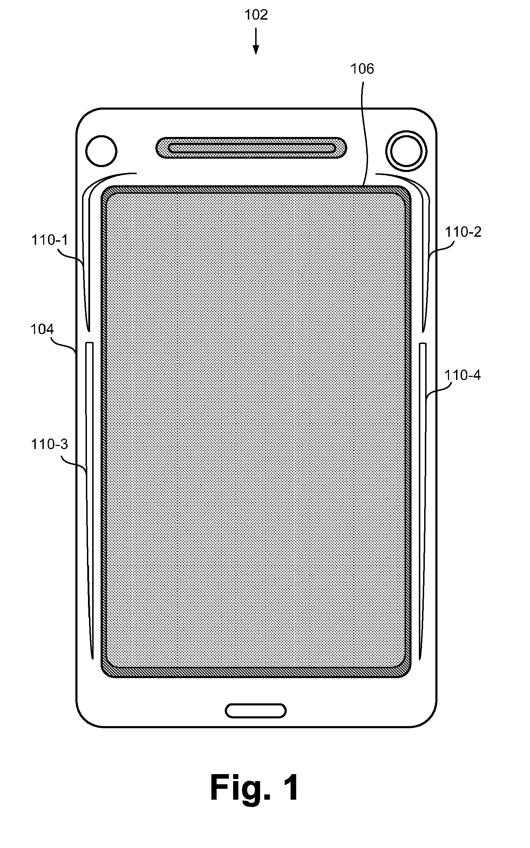

Fig. 1 is a diagram of an exemplary user device 102 in which concepts described herein may be implemented. In Fig. 1, user device 102 is shown as including housing 104, main display 106, and single-pixel displays 110-1 through 110-4 (herein "single-pixel display 110" or "single-pixel displays 110"). Both main display 106 and single-pixel displays 110 may be attached to housing 104.

Because single-pixel displays 110-1 through 110-4 consumes less power compared to main display 106, single-pixel displays 110-1 may be used to convey information in place of main display 106, for decorative purposes and/or to indicate long lasting states of user device 102. For example, single-pixel displays 110 may shine, show swirling colors, and/or light user device 102 in different patterns/arrangements for enhancing aesthetic qualities of user device 102. In another example, single-pixel display 110 may convey that user device 102 is turned-on, has received a new message, etc. In both of the examples, single-pixel displays 110 may provide appropriate visual patterns when a slow changing voltage or electric field is applied over single-pixel displays 110.

Single-pixel displays 110 may be fabricated or implemented economically. Single-pixel displays 110 and/or the circuitries for controlling single-pixel displays 110 may be structurally simple, in contrast to main display 106 and control components that are associated with main display 106.

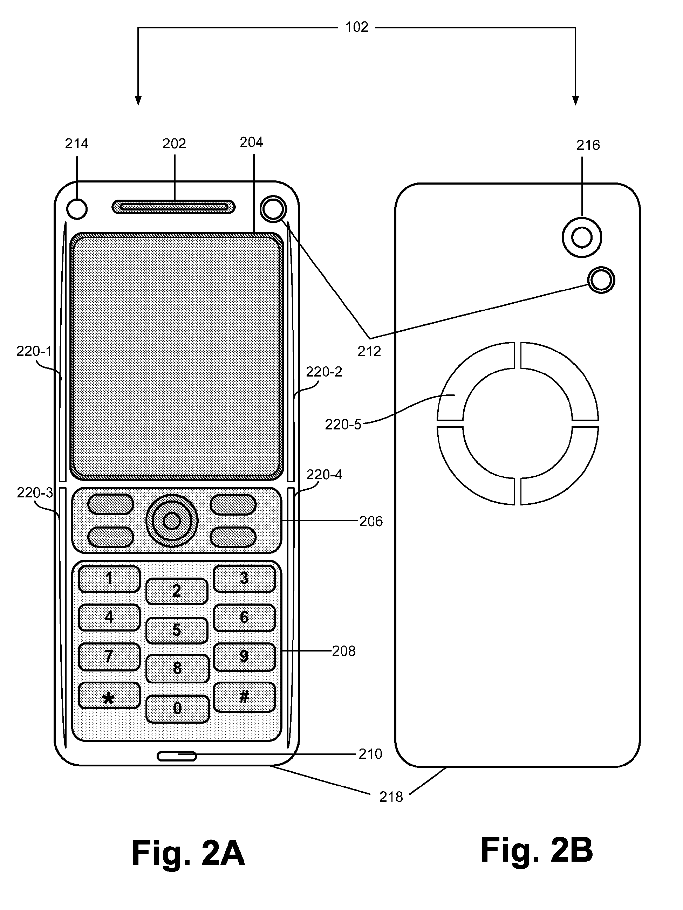

Figs. 2A and 2B are front and rear views, respectively, of user device 102 according to another implementation. Typically, user device 102 may include any of the following devices with a main display screen: a tablet computer; a mobile telephone; a cellular phone; a personal communications system (PCS) terminal that may combine a cellular radiotelephone with data processing, facsimile, and/or data communications capabilities; a laptop; a personal digital assistant (PDA) that can include a telephone; a gaming device or console; a peripheral (e.g., wireless headphone); a digital camera; or another type of computational or communication device.

In this implementation, user device 102 may take the form of a portable phone (e.g., a cellular phone). As shown in Figs. 2A and 2B, user device 102 may include a speaker 202, display 204, microphone 210, sensors 212, front camera 214, rear camera 216, housing 218, and single-pixel displays 210-1 through 220-5 (herein "single-pixel display 220" or "single-pixel displays 220"). Depending on the implementation, user device 102 may include additional, fewer, different, or different arrangement of components than those illustrated in Fig. 2.

Speaker 202 may provide audible information to a user of user device 102. Display 204 may provide visual information to the user, such as an image of a caller, video images received via rear camera 216 or pictures. In addition, display 204 may include a touch screen via which user device 102 receives user input.

Microphone 210 may receive audible information from the user and/or the surroundings. Sensors 212 may collect and provide, to user device 102, information (e.g., acoustic, infrared, etc.) that is used to aid the user in capturing images or in providing other types of information (e.g., a distance between a user and user device 102).

Front camera 214 and rear camera 216 may enable a user to view, capture, store, and process images of a subject in/at front/back of user device 102. Front camera 214 may be separate from rear camera 216 that is located on the back of user device 102. Housing 218 may provide a casing for components of user device 102 and may protect the components from outside elements.

Single-pixel displays 220 may provide visual information to the user, such as an indication of an incoming call, whether user device102 is turned on, an alert (e.g., scheduled appointment time)), etc. In addition, display 204 may provide patterns or arrangement of images/colors to enhance aesthetics of user device 102. In some implementations, single-pixel displays 220 may be made of flexible components that are capable of being attached to curved surfaces of housing 218 without compromising its functionality.

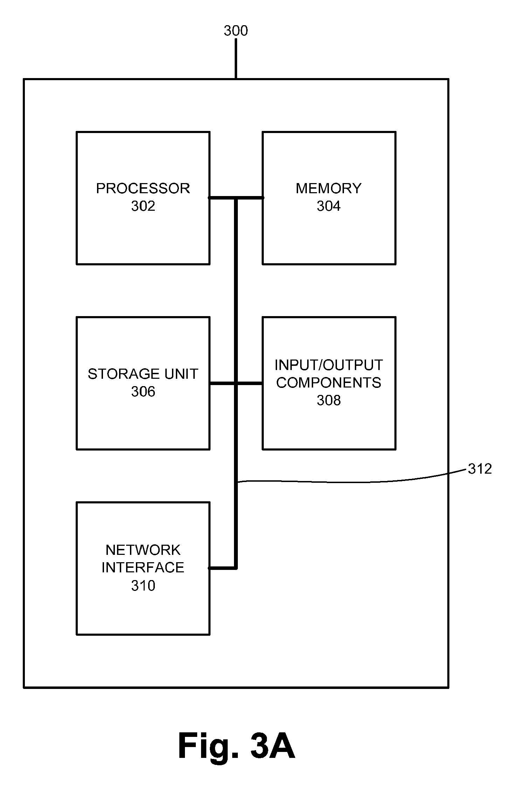

Fig. 3A is a block diagram of exemplary components of user device 102. As shown in Fig. 3A, user device 102 may include a processor 302, a memory 304, a storage unit 306, input/output components 308, a network interface 310, and a communication path 312.

Processor 302 may include a processor, a microprocessor, an Application Specific Integrated Circuit (ASIC), a Field Programmable Gate Array (FPGA), and/or other processing logic (e.g., audio/video processor) capable of processing information and/or controlling user device 102. Memory 304 may include static memory, such as read only memory (ROM), and/or dynamic memory, such as random access memory (RAM), or onboard cache, for storing data and machine-readable and/or executable instructions. Storage unit 306 may include storage devices, such as a floppy disk, CD ROM, CD read/write (R/W) disc, and/or flash memory, as well as other types of storage devices.

Input/output components 308 may include single-pixel displays (e.g., single-pixel displays 220), a display screen (e.g., display 204), a keyboard, a mouse, a speaker, a microphone, a Digital Video Disk (DVD) writer, a DVD reader, Universal Serial Bus (USB) port, and/or other types of components for converting physical events or phenomena to and/or from digital signals that pertain to user device 102. In some implementations, output components 308 may include components for providing control signals from processor 302 to single-pixel displays 220.

Network interface 310 may include a transceiver that enables user device 102 to communicate with other devices and/or systems. For example, network interface 408 may communicate via a network, such as the Internet, a terrestrial wireless network (e.g., a WLAN), a cellular network, a satellite-based network, a wireless personal area network (WPAN), etc. Additionally or alternatively, network interface 310 may include a modem, an Ethernet interface to a LAN, and/or an interface/ connection for connecting user device 102 to other devices (e.g., a Bluetooth interface).

Communication path 312 may provide an interface through which components of user device 102 can communicate with one another.

In different implementations, user device 102 may include additional, fewer, or different components than the ones illustrated in Fig. 3A. For example, user device 102 may include additional network interfaces, such as interfaces for receiving and sending data packets. In another example, a user device 102 may include subscriber identity module (SIM), additional single-pixel displays, or another type of card/device/component.

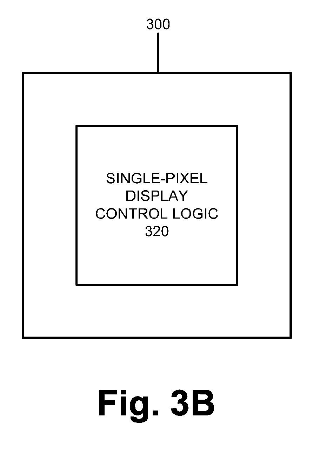

Fig. 3B is a block diagram of an exemplary functional component of user device 102. As shown, user device 102 may include single-pixel display control logic 320. Because Fig. 3B is provided for simplicity and ease of understanding, Fig. 3B does not show or illustrate other components, such as an operating system, document application, game application, messaging application, etc.

Single-pixel display control logic 320 may control single-pixel displays 220. In one implementation, single-pixel display control logic 320 may be integrated into another software component or may operate in stand-alone mode. For example, software instructions that handle incoming calls may include single-pixel display control logic 320. In such a case, when user device 102 receives an incoming call, the program/thread for handling incoming calls may not only activate a ringtone, but may also send signals to single-pixel displays 220 to indicate the incoming call.

In a different implementation, single-pixel display control logic 320 may run as a separate program/thread that continually checks for events or triggers for changing control signals to single-pixel displays 220.

Depending on the implementation, single-pixel display control logic 320 may include not only software components, but hardware components (e.g., analog-to-digital converter, etc.).

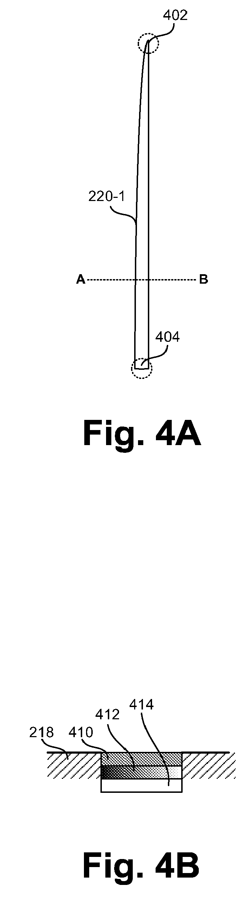

Fig. 4A is a diagram of exemplary single-pixel display 220-1. Fig. 4A shows a top edge 402 and bottom edge 404, about which electrodes (not shown) may be coupled. Fig. 4A is provided for illustrative purposes, and, therefore, depending on the implementation, edges 402 and 404 may cover larger or smaller areas, and/or may be configured differently.

The electrodes may apply an electric potential between top edge 402 and bottom edge 404 via wiring (or a conductive path) through housing 218 from a single-pixel device interface (not shown) that is controlled by processor 302. When user device 102 applies a slow-changing electric potential (e.g., voltage) between top and bottom edges 402 and 404, single-pixel display 220-1 may change illuminated color or color pattern on its surface.

Fig. 4B is a block diagram of an exemplary configuration of a cross-sectional view of single-pixel display 220-1. The cross-section may be at a line AB of Fig. 4A. As shown, single-pixel display 220-1 may be embedded or mounted on housing 218 (see also Figs. 2A and 2B) of user device 102, and may include a transparent layer 410, active layer 412, and light layer 414. Depending on the implementation, single-pixel display 220-1 (or another single-pixel display) may include additional, fewer, or different layers/components than those illustrated in Fig. 4B. For example, a single-pixel display may include a polarizing layer, a reflective layer (e.g., for providing light in place of light layer 414), a color filter, etc.

Transparent layer 410 may protect active layer 412 and/or light layer 414 while allowing light to be transmitted from light layer 414 to a user through active layer 412 and transparent layer 414. In some implementations, transparent layer 410 may be implemented so as to increase contrast. Additionally or alternatively, transparent layer 410 may be tinted or colored to match the color of the transmitted light to avoid loss of light.

Active layer 412 may display different color, color gradient or change the amount of light that is transmitted or reflected from single-pixel display 210-1 (e.g., change illumination) when an electric potential applied between top and bottom edges 402 and 404 changes. As used herein, the term "color" may include grayscale (i.e., "gray" is a color). Active layer 412 may include organic light emitting diodes (OLEDs), electrochromic polymer (e.g., plastic), electronic paper, electronic ink, and/or other types of material. Light layer 414 may include sources of light, such as a light guide-like component, LEDs, OLEDs, reflective material, etc.

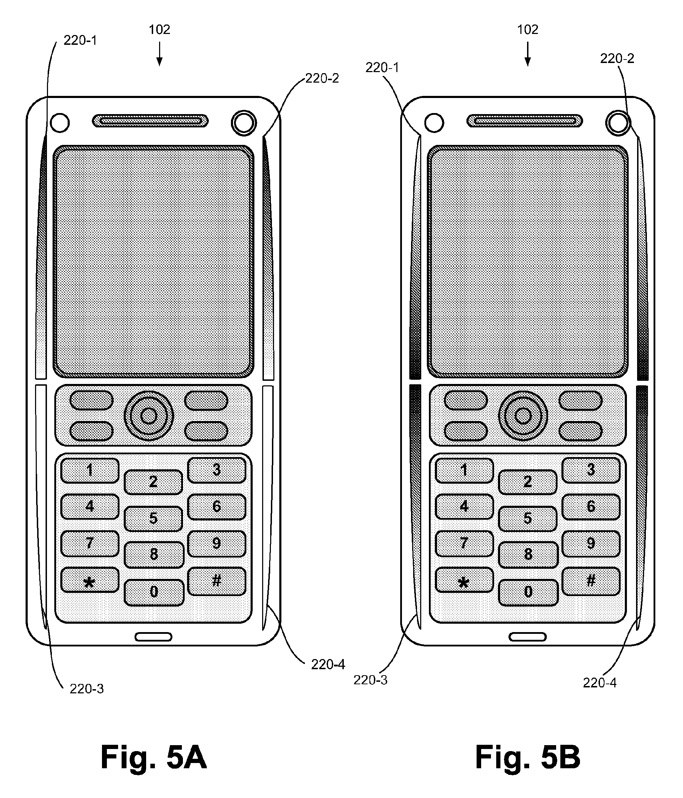

Figs. 5A through 5C illustrate controlling single-pixel displays 220 of Fig. 2A. Assume that an event associated with user device 102 has occurred, such as turning on user device 102.

Fig. 5A shows single-pixel displays 220 when single-pixel display control logic 320 applies a signal to single-pixel displays 220. As shown, in response to the electric potential between the top and bottom edges (e.g., edges 402 and 404 in Fig 4A), single-pixel displays 220-1 and 220-2 may show color gradient in the lengthwise direction. That is, the material in active layer 412 may have the property of responding to the applied voltage by showing color gradient.

Fig. 5B illustrates single-pixel displays 220 after displays 220 show the color gradient of Fig. 5A. As shown in Fig. 5B, the color gradient on single-pixel displays 220-1 and 220-2 illustrated in Fig. 5A has migrated from the top edges toward the bottom edges as a function of time and the electric potential between the top and bottom edges. In addition, in response to the electric potential between the top and bottom edges of single-pixel displays 220-3 and 220-4, single-pixel displays 220-3 and 220-4 may also generate a color gradient in the lengthwise direction.

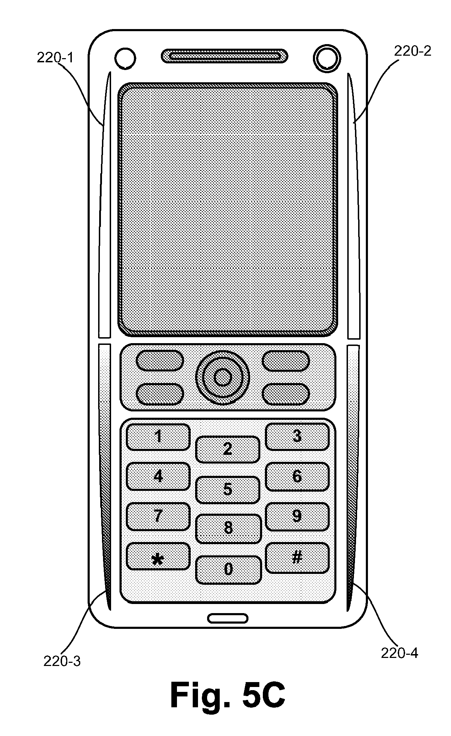

Fig. 5C illustrates color gradients on single-pixel displays 220 after displays 220 show the color gradient of Fig. 5B. As shown in Fig. 5C, the color gradient on single-pixel displays 220-3 and 220-4 as illustrated in Fig. 5B has migrated toward the bottom edges as a function of time and electric potentials at the top and bottom edges of single-pixel displays 220-3 and 220-4.

In accordance with Figs. 5A through 5C, the color gradient in single-pixel displays 220 may appear to "move" from about the top to the bottom of user device 102. The color gradient may continuously repeat its motion through single-pixel displays 220 until the original event that triggered single-pixel displays 220 terminates (e.g., user device 102 turns off) or another event occurs.

Figs. 5A through 5C illustrate one example of visual patterns that single-pixel displays may present. Single-pixel display may show other patterns, depending on locations of electrical contacts on the displays, shapes of the displays, material and/or technology used for constructing the displays, the control signals that are generated from single-pixel display control logic 320 (e.g., a sine save, square wave, pulses, etc.) to control the displays.

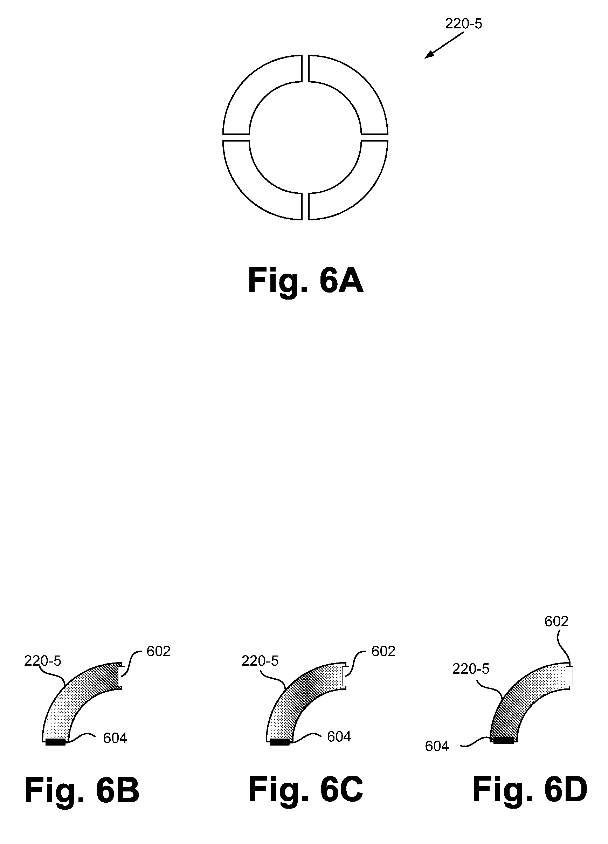

Figs. 6A through 6D illustrate controlling exemplary single-pixel displays 220-5 of Fig. 2B. Fig. 6A shows the single-pixel displays 220-5 of Fig. 2B. Figs. 6B through 6D illustrate a color gradient (e.g., blue, red, orange, yellow, etc.) moving from a top edge 602 to bottom edge 604 of one of single-pixel displays 220-5 as a function of time. In other implementations, the locations of the contacts may be varied to create different types of patterns.

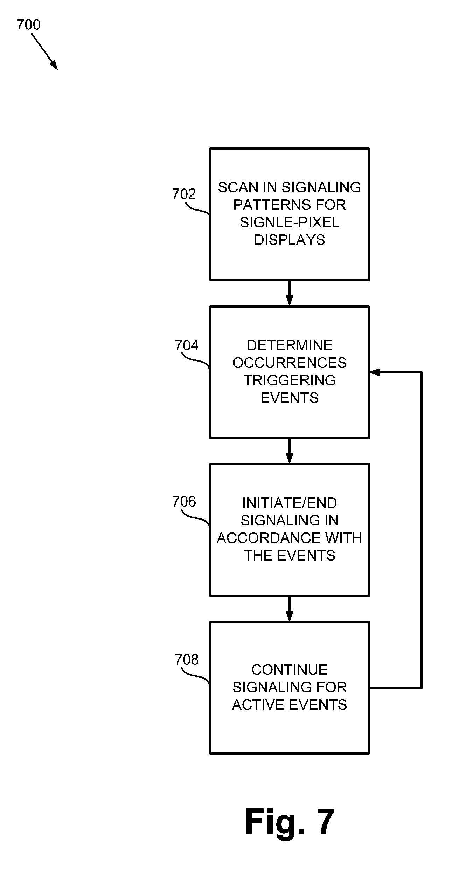

Fig. 7 is a flow diagram of an exemplary process 700 for controlling single-pixel displays. In some implementations, single-pixel display control logic 320 may perform process 700. In other implementations, single-pixel display control logic 320 may execute a set of program instructions/scripts for displaying a pattern(s) in response to a particular event.

Assume that user device 102 has been turned on. At block702, single-pixel display control logic 320 may scan in data that corresponds to signaling patterns to be applied to single-pixel displays for different types of events. For example, in one implementation, single-pixel display control logic 320 may read, from storage unit 306, data for applying electric potentials at contacts at top and bottom edges 402 and 404 of single-pixel display 220-1 in response to turning on user device 102. In another example, in a different implementation, single-pixel display control logic 320 may scan in data that corresponds to signals (e.g., voltages) that are to be applied to contacts on single-pixel display 220-5 when user device 102 receives an incoming call.

In some implementations, each signaling pattern may depend on the type of event. For example, when a user turns on user device 102, single-pixel displays 220 may light up without changing color. In the same example, in response to an incoming call, however, the single-pixel displays 220 may show changing color patterns.

Single-pixel display control logic 320 may determine whether one or more triggering events have occurred (block 704). For example, single-pixel display control logic 320 may determine that user device 102 has received an incoming call, has been turned on, received a text message or an email, etc

Single-pixel display control logic 320 may initiate or end signaling for each of the triggering events (block 706). For example, upon receiving an incoming call, single-pixel display control logic 320 may initiate signaling for displaying patterns illustrated in Figs. 5A through 5C. In another example, upon detecting the end of the call, single-pixel display control logic 320 may stop signaling the display patterns illustrated in Figs. 5A through 5C.

Single-pixel display control logic 320 may continue to provide signals for events that are not terminated at block 706 (block 708). For example, if a particular phone call is not terminated, single-pixel display-control logic 320 may continue to provide signals for displaying patterns illustrated in Figs. 5A through 5C to single-pixel displays 220-1 through 220-4.

At block 708, process 700 may return to block 704, to respond to other events.

In process 700, in signaling a single-pixel display, single-pixel display control logic 320 may provide a slow, continuous or discrete stream of voltages across contacts on single-pixel display. The signal may produce desired patterns on the single-pixel display.

### CONCLUSION

Because single-pixel displays of a user device consume less power compared to the main display, the single-pixel displays may be used in place of the main display for decorative purposes and/or to indicate long lasting states of the user device. The single-pixel displays may be economically fabricated or implemented as part of the user device. The single-pixel displays may be structurally simple to fabricate/implement.

The foregoing description of implementations provides illustration, but is not intended to be exhaustive or to limit the implementations to the precise form disclosed. Modifications and variations are possible in light of the above teachings or may be acquired from practice of the teachings.

In the above, while series of blocks have been described with regard to an exemplary process or processes, the order of the blocks may be modified in other implementations. In addition, non-dependent blocks may represent acts that can be performed in parallel to other blocks. Further, depending on the implementation of functional components, some of the blocks may be omitted from one or more processes.

It will be apparent that aspects described herein may be implemented in many different forms of software, firmware, and hardware in the implementations illustrated in the figures. The actual software code or specialized control hardware used to implement aspects does not limit the invention. Thus, the operation and behavior of the aspects were described without reference to the specific software code - it being understood that software and control hardware can be designed to implement the aspects based on the description herein.

It should be emphasized that the term "comprises/comprising" when used in this specification is taken to specify the presence of stated features, integers, steps or components but does not preclude the presence or addition of one or more other features, integers, steps, components, or groups thereof.

Further, certain portions of the implementations have been described as "logic" that performs one or more functions. This logic may include hardware, such as a processor, a microprocessor, an application specific integrated circuit, or a field programmable gate array, software, or a combination of hardware and software.
No element, act, or instruction used in the present application should be construed as critical or essential to the implementations described herein unless explicitly described as such. Also, as used herein, the article "a" is intended to include one or more items. Further, the phrase "based on" is intended to mean "based, at least in part, on" unless explicitly stated otherwise.

## Claims

1. A device comprising:
a display screen to provide a graphical user interface;
a single-pixel display configured to provide color gradient patterns, the single-pixel display including no more than one pixel; and
a processor to send a signal to the single-pixel display to present the color gradient patterns.

2. The device of claim 1, wherein the single-pixel display includes one of:
an eletrochromic polymer;
an electronic ink; or
an electronic paper.

3. The device of claim 1 or 2, wherein the device includes one of:
a cellular phone, a tablet computer, or a laptop computer.

4. The device of claim 2, the electrochromic material including:
a light-source layer, an active layer formed over the light source layer, and a transparent layer formed over the active layer.

5. The device of any of claim 1-4, wherein the processor is further configured to:
detect a change in a state of the device; and
send the signal when the processor detects the change in the state.

6. The device of claim 5, wherein the change in the state includes:
turning the device on or off;
receiving an incoming call or terminating a received call; or
receiving an email or text message.

7. The device of any of claim 1-6, wherein the signal includes one of:
a sine wave or a square wave.

8. The device of any of claim 1-7, wherein the visual pattern includes:
a color gradient across a surface of the single-pixel display;
a color change; or
a change in illumination.

9. The device of claim 8, wherein the color gradient moves from one area of the single-pixel display to another area of the single-pixel display depending on the signal applied to the surface of the single-pixel display.

10. The device of any of claim 1-9, further comprising:
a housing having curved surfaces to which the single-pixel display is affixed.

11. The device of any of claim 1-10, wherein the processor is further configured to:
read software instructions from a memory device; and
change the visual pattern in accordance with the software instructions.

12. A method comprising:
scanning, by a portable device, information from a storage unit of the portable device to change a color gradient on a surface of a single-pixel display attached to a housing of the portable device;
detecting, by the portable device, a change in state of the portable device;
sending a square wave signal or sine wave signal to the single-pixel display when the information provides for sending the slow-changing square wave or sine wave in response to the detected change in state of the portable device; and
changing the illumination, color, or color gradient in accordance with the square wave signal or the sine wave signal.

13. The method of claim 12, wherein the detecting the change in state includes detecting an incoming communication or detecting a powered-up state of the device.

14. The method of claim 12 or 13, wherein the changing the color gradient includes:
moving the color gradient from one area of the single-pixel display to another area of the single-pixel display.

15. The method of any of claim 12-14, wherein the single-pixel display includes electrohromic plastic.
